# EUROPEAN PATENT SPECIFICATION

(11) **EP 3 041 002 B1**
(45) Date of publication and mention of the grant of the patent: **01.03.2023**
(21) Application number: 15203180.3
(22) Date of filing: 30.12.2015
(51) Int. Cl.: G21K 1/10

(54) **RAY FILTER AND DUAL-ENERGY X-RAY INSPECTION SYSTEM**
STRAHLENFILTER UND DOPPELENERGIERÖNTGENUNTERSUCHUNGSSYSTEM
FILTRE DE RAYON ET SYSTÈME D'INSPECTION À RAYONS X BIÉNERGIQUE

(30) Priority: 30.12.2014 CN 201410838393
(43) Date of publication of application: 06.07.2016
(73) Proprietor: Nuctech Company Limited, TongFang Building, Shuangqinglu, Haidian District Beijing 100084 (CN)
(72) Inventor: KANG, Kejun, 100084 Beijing (CN); CHEN, Yumei, 100084 Beijing (CN); LIU, Yaohong, 100084 Beijing (CN); YAN, Xinshui, 100084 Beijing (CN); YIN, Wei, 100084 Beijing (CN); GUAN, Weiqiang, 100084 Beijing (CN)
(74) Representative: Dunlop, Hugh Christopher

(56) References cited:
- WO-A1-01/59485
- WO-A1-2008/090518
- WO-A1-2012/160967
- DE-A1-102012 207 626
- FR-A1- 2 788 599
- US-A- 4 277 685
- US-A- 4 592 083
- US-A- 5 838 758
- US-A1- 2007 104 320

## Description

### BACKGROUND OF THE INVENTION

### Field of the Invention

The present disclosure relates to the field of (fixed or mobile) radiation scan imaging inspection, and particularly, to a ray filter and a dual-energy X ray inspection system for, for example, a container.

### Description of the Related Art

X-rays used in a current container inspection system have been developed from single energy rays to high and low dual-energy rays, which leads to, due to an improvement in penetrability of the dual-energy rays relative to the single energy rays, a leap forward development in identification of an object to be inspected.

Low energy components are filtered from high energy rays of the dual-energy X-rays so as to improve imaging quality. Thus, a particular mechanism is required to alternately select X-rays having different energy, that is, to filter out low-energy ray components, such as, in a high-energy state, while allowing the low-energy X-rays to be emitted in another state. Since a width of an X-ray region for the scan system is only 2~3mm, such mechanism is necessarily compact and occupies a small space so that the total volume of the inspection system will not be increased or so that the mechanism may be directly added into an existing inspection system without changing arrangement of other parts of the inspection system.

For example, GB2453641 describes security inspection of liquid articles with dual energy scanning at different energies (i.e. different X-ray frequencies) preferably below 200 keV; GB2454782 describes irradiating an object under inspection using high-energy (i.e. high-frequency) and low-energy (i.e. low-frequency) X-rays preferably below 200 keV.

US 5838758 A discloses a device and method for finding a specific material superimposed on an unknown background when the locations of the specific material and the background are unknown, for example, inside an item of baggage. US 4277685 discloses a rotating fan beam tomographic scanner including an adjustable collimator and shutter assembly. FR 2788599 A1 discusses a method and apparatus for producing color image differentiating elements, comprising counting particles passing through examined zones, and determining their spectrums. DE 102012207626 A1 discloses an X-ray apparatus for use in computed tomography for emitting multiple, different X-ray spectra of different average photon energies, comprises filter rotatably mounted relative to X-ray tube, and drive unit for rotational driving of filter. US 2007/104320 A1 discloses an x-ray flux management device that adaptively attenuates an x-ray beam to limit the incident flux reaching a subject and radiographic detectors in potentially high-flux areas while not affecting the incident flux and detector measurements in low-flux regions This document discloses a beam chopper having a rotatable frame and at least one x-ray transmission window disposed in the rotatable frame that allows a generally free transmission of x-rays. The chopper also has at least one x-ray filtering window disposed in the rotatable frame that filters x-rays.

WO 01/59485 A1 discloses a system and methods for non-invasive x-ray inspection of an enclosure in such a manner as to reduce the ambient radiation dose to below a specified level. US 4592083 A discusses a high speed actuator for controlling the shutter in x-ray equipment. WO 2012/160967 A1 discloses an X-ray generator provided in a bone densitometry system, etc., having a structure above an X-ray generation unit. Specifically, the structure is provided around a filter unit, which can be rotated.

### SUMMARY OF THE INVENTION

In view of the above, an object of the present disclosure is to solve the above problems, and to provide a mechanical configuration having a small smart and compact structure and reliable performance for enabling selection of energy of X-rays.

According to a first aspect of the present disclosure, there is provided a ray filter, for use in a dual-energy X ray inspection system configured to emit high-energy X-rays and low-energy X-rays as recited by claim 1.

According to a second aspect of the present disclosure, there is provided a dual-energy X ray inspection system as recited by claim 5.

### BRIEF DESCRIPTION OF THE DRAWINGS

Fig. 1 shows a ray filter according to the present disclosure and a cross sectional view along line A-A, wherein both high and low-energy X-rays can pass through the ray filter;
Fig. 2 shows a ray filter according to the present disclosure and a cross sectional view along line A-A, wherein only high-energy X-rays can pass through the ray filter; and

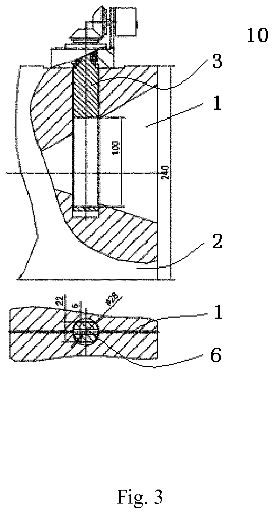

Fig. 3 shows a ray filter according to an embodiment of the present disclosure and a cross sectional view along line A-A, where specific sizes of several parts are indicated.

### DETAILED DESCRIPTION OF PREFERRED EMBODIMENTS OF THE INVENTION

Detail reference to embodiments of the present disclosure will be provided with example shown in the attached drawings. In the drawings, the same or like reference numbers refer to the same or like elements. Embodiments of the present disclosure will be described in detail with reference to the attached drawings.

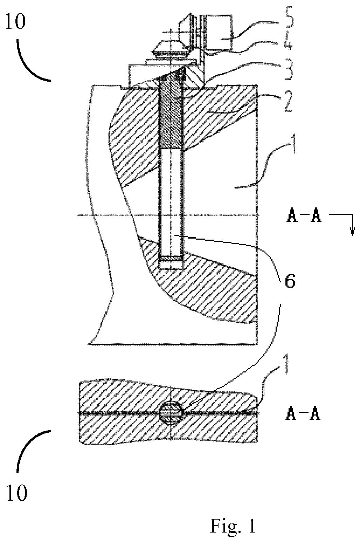

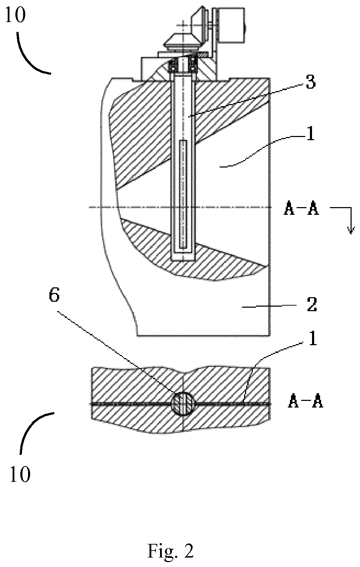

According to one embodiment of the present invention, as shown in Figs. 1 and 2, a ray filter 10 may be used in a dual-energy X ray inspection system configured to emit high-energy X-rays and low-energy X-rays alternately. In the dual-energy X ray inspection system, a dual-energy X-ray source is provided for emitting X-rays having high-energy and X-rays having low-energy alternately. The ray filter 10 is arranged in front of the X-ray source to filter out undesirable X-rays in a particular state so as to achieve selection of energy of the X-rays. Specifically, the ray filter 10 is switchable between a first state where the ray filter is configured to allow the high-energy X-rays and the low-energy X-rays to pass therethrough and a second state where the ray filter is configured to only allow the high-energy X-rays to pass therethrough.

According to one embodiment of the present invention, the ray filter 10 comprises: a ray filter body 2 having a first slit opening 1 through which the X-rays are emitted; and a shielding member 3 movably provided in the ray filtration body in a direction perpendicular to a direction in which the rays are emitted, and being disposed across the first slit opening 1.

The first slit opening 1 is an elongate slit opening, which has a cross section that may be in the form of trumpet opening as shown in the figure, and a width corresponding to a width of the X-rays of the scan system, generally of 2~3mm. The width may be set according to actual requirements. The ray filter body 2 is provided with a hole, into which the shielding member 3 is inserted.

There is no exact requirement to the sizes of the shielding member 3 and the hole, as long as the shielding member 3 can be placed and rotated within the hole. Preferably, the size of the shielding member 3 substantially matches the size of the hole. The hole runs through the first slit opening 1, so that a portion of the shielding member 3 will face the whole of the first slit opening 1 when the shielding member 3 is inserted in to the hole. In other words, if the shielding member 3 is a solid piece, the first slit opening 1 will be completely blocked after the shielding member 3 is inserted into the hole.

The shielding member 3 comprises a second slit opening 6 and is arranged in the hole of the ray filter body 2 so that it can be rotated. The ray filter 10 is switchable between the first state and the second state through rotation of the shielding member 3. Specifically, the second slit opening 6 is aligned with the first slit opening 1 in the first state so that the first slit opening 1 is not blocked and the first slit opening 1 forms a passage for allowing the rays to pass therethrough, at this time, the high-energy X-rays and low-energy X-rays can pass through the first slit opening 1. When the shielding member 3 is rotated, that is, when the ray filter 10 is in the second state different from the first state, the second slit opening 6 is shifted from the first slit opening 1 so that the first slit opening 1 is blocked by the solid portion of the shielding member 3, thereby the low-energy X-rays being blocked by the shielding member 3 from being emitted through the first slit opening 1. According to an embodiment of the present disclosure, however, due to structure and arrangement of the shielding member 3, the high-energy X-rays having high penetrability can still transmit through a side wall having a limited thickness of the second slit opening 6 of the shielding member 3 while the low-energy X-rays are shielded by the shielding member 3. Thus, in the second state, the dual-energy X ray inspection system only emits X-rays having one type of energy so as to obtain a clear inspection image.

According to one embodiment of the present disclosure, the shielding member 3 may be an elongate rod-like member. The shielding member 3 according to the claimed invention is a cylindrical rod. The shielding member 3 may be a quadrate pillar with rounded ends. The shielding member 3 may be other forms of pillars, as long as the shielding member 3 can be rotated and shield low-energy X-rays. The second slit opening 6 is provided in the rod-like member, such that the second slit opening 6 runs through the shielding member 3 to form a slit-like through hole. The size of the second slit opening 6 may be designed according to actual requirements.

Since the shielding member 3 is needed to allow the high-energy X-rays to transmit through the shielding member 3 while shield the low-energy X-rays, the material of the shielding member 3 may be selected as required so that the high-energy X-ray can transmit through the shielding member 3. Further, preferably, the shielding member 3 has a smaller size, so that the thickness of the side wall of the second slit opening 6 is small, thereby the shielding member 3 allowing the high-energy X-ray to transmit therethrough while shielding the low-energy X-rays. The thickness of the side wall may be determined depending on energy of actual low-energy and high-energy X-rays and the material of the shielding member 3.

The ray filter 10 has a small total size, and thus may be easily applied in an X-ray inspection system. Since the size of the ray filter 10 is small, shielding states can be selected by rotating the shielding member 3, and the ray filter has a simple and compact configuration, the ray filter 10 may be directly added into the existing X-ray system without changing original design of the existing system, thereby greatly reducing complexity of the system.

According to an embodiment of the present disclosure, the ray filter 10 may further comprise a shielding member drive device configured to drive the shielding member 3 to rotate so that the ray filter 10 is switched between the first state and the second state through rotation of the shielding member 3, to match the energy switch of the X rays. In one embodiment, the shielding member drive device comprises a support structure and a gear transmission, wherein the gear transmission is supported in the support structure and engaged with an end of the shielding member 3 so that the gear transmission is capable of driving the shielding member 3 to rotate through engagement of the gear transmission with the shielding member 3. For example, the gear transmission may include a bevel gear, which is meshed with a gear 4 provided on the shielding member 3, as shown in Figs. 1 and 2. Other types of gear transmissions may be anticipated by those skilled in the art. In one embodiment, the shielding member 3 may be rotated manually. For example, an end of the shielding member 3 is provided with a handle, the shielding member 3 can be rotated by rotating the handle.

A particular embodiment of the ray filter 10 according to the present disclosure is provided below. In this embodiment, the height of the ray filter body 2 is 240mm. The shielding member 3 may be a cylinder having a diameter of 28mm and the size of the second slit opening 6 in the shielding member 3 in a length direction of the shielding member 3 (as shown in the figures) is 100mm, which is selected according to an flare angle of the rays and the position of the shielding member, as long as the second slit opening 6 does not obstruct the low-energy X-rays from passing therethrough.

The material of the shielding member may include tungsten, tungsten alloy, or other high-Z material. At this time, the width of the second slit opening 6 may be about 6mm. In order to allow transmission of the high-energy X-rays, the cylindrical shielding member 3 may be further machined, as shown in the figures, the shielding member 3 may be trimmed in a direction so that the shielding member 3 is thinned, thereby the total thickness of the machined shielding member 3 is 22mm (instead of the maximal thickness equal to the diameter of 28mm). When the shielding member 3 blocks the first slit opening 1, the low-energy X-rays cannot pass through the shielding member 3, while the high-energy X-ray can transmit through the shielding member 3 that is made of tungsten and has an effective total thickness of 16mm in a ray transmission direction. A portion of the shielding member within the first slit opening 1 is preferably sized so that the thickness of a wall of the part of the shielding member through which the X-rays transmit when passing through the first slit opening 1 is constant, thus the portion of the shielding member that is trimmed preferably has a transverse width greater than the width of the first slit opening 1, such that when the shielding member 3 blocks the first slit opening 1, the wall of the shielding member facing transmission of the X-rays is, according to the claimed invention, planar (rather than curved), and the face from which the X-rays are emitted is also, according to the claimed invention, planar, thereby a distance by which the high-energy X-rays transmit through the shielding member 3 is constant. The above disclosed sizes are only described as an example, other similar or appropriate sizes may be possible.

For example, when the shielding member 3 is a pillar having other shapes, it is only necessary that the portion of the shielding member within the first slit opening is sufficient to block the low-energy X-rays and is configured so that portions of shielding member through which the high-energy X-rays transmit through has the same thickness. In other words, the shielding member 3 has planar incidence face and emitting face, so that high-energy X-rays transmit through portions of shielding member having the same thickness. That is, the shielding member has a planar exterior surface portion through which the high-energy X-rays are emitted in and out.

An embodiment of the present disclosure provides a dual-energy X ray inspection system comprising a dual-energy X-ray source configured to emit dual-energy X-rays, for example, to emit high-energy X-rays and low-energy X-rays. The dual-energy X ray inspection system further comprises the ray filter 10 as described above. The ray filter 10 may be configured in a state where high-energy and low-energy X-rays may pass therethrough when it is required to emit the high-energy and low-energy X-rays from the dual-energy X ray inspection system. The ray filter 10 may be configured in a state where only high-energy X-rays may pass therethrough when it is only required to emit the high-energy X-rays from the dual-energy X ray inspection system.

Having described and shown the present disclosure in detail with reference to exemplary embodiment the present disclosure, it would be appreciated by those skilled in the art that various changes or modifications may be made in form and detail to these embodiments without departing from the principles of the present invention, the scope of which is defined in the claims.

References to high-energy and low-energy X-rays may include X-rays with different energies below 200 keV or with energies above and below 200 keV. References to high-Z materials may include materials with atomic number 72 or above.

## Claims

1. A ray filter (10) for use in a dual-energy X ray inspection system configured to emit high-energy X-rays and low-energy X-rays,
wherein the ray filter is switchable between a first state where the ray filter is configured to allow high-energy X-rays and low-energy X-rays emitted from an X-ray source to pass therethrough and a second state where the ray filter is configured to only allow the high-energy X-rays to pass therethrough,
wherein the ray filter comprises a ray filter body (2) having a first slit opening (1) through which the X-rays are emitted and which is an elongate slit opening, and a shielding member (3) which is an elongate cylindrical rod,
wherein the shielding member is provided in the ray filter body in a direction perpendicular to a direction in which the rays are emitted, and wherein the shielding member is arranged so that it can be rotated,
wherein the shielding member comprises a second slit opening (6) that runs through said shielding member to form a slit-like through hole, and the shielding member is arranged to switch the ray filter between the first state and the second state through the rotation,
wherein, in the first state, the second slit opening is aligned with the first slit opening so as to form a passage for allowing the rays to pass through the first slit opening and the second slit opening, and wherein, in the second state, the second slit opening is shifted from the first slit opening so that the first slit opening is blocked by a solid portion of the shielding member,
wherein in the second state the shielding member has a planar exterior surface portion through which the high-energy X-rays are transmitted and the face of the shielding member from which the X-rays are emitted is also planar.

2. The ray filter according to claim 1, wherein
the ray filter comprises a shielding member drive device configured to drive the shielding member to rotate so that the ray filter is switched between the first state and the second state through rotation of the shielding member.

3. The ray filter according to claim 2, wherein
the shielding member drive device comprises a support structure and a gear transmission, the gear transmission being supported in the support structure and engaged with an end of the shielding member so that the gear transmission is capable of driving the shielding member to rotate through engagement of the gear transmission with the shielding member.

4. The ray filter according to claim 1, wherein
the shielding member is made of tungsten alloy.

5. A dual-energy X ray inspection system, comprising:
a dual-energy X-ray source configured to emit dual-energy X-rays; and
the ray filter according to any one of claims 1-4.

## Patentansprüche

1. Strahlenfilter (10) zur Verwendung in einem Dual-Energie-Röntgenprüfsystem, das zum Emittieren von hochenergetischen Röntgenstrahlen und niederenergetischen Röntgenstrahlen konfiguriert ist,
wobei der Strahlenfilter zwischen einem ersten Zustand, in dem der Strahlenfilter zum Durchlassen von von einer Röntgenquelle emittierten hochenergetischen Röntgenstrahlen und niederenergetischen Röntgenstrahlen konfiguriert ist, und einem zweiten Zustand umschaltbar ist, in dem der Strahlenfilter zum Durchlassen nur der hochenergetischen Röntgenstrahlen konfiguriert ist,
wobei der Strahlenfilter einen Strahlenfilterkörper (2) mit einer ersten Schlitzöffnung (1), durch die die Röntgenstrahlen emittiert werden und die eine längliche Schlitzöffnung ist, und ein Abschirmelement (3) umfasst, das ein länglicher zylindrischer Stab ist,
wobei das Abschirmelement im Strahlenfilterkörper in einer Richtung lotrecht zu einer Richtung vorgesehen ist, in der die Strahlen emittiert werden, und wobei das Abschirmelement so ausgelegt ist, dass es gedreht werden kann,
wobei das Abschirmelement eine zweite Schlitzöffnung (6) umfasst, die durch das genannte Abschirmelement verläuft, um ein schlitzartiges Durchgangsloch zu bilden, und das Abschirmelement zum Umschalten des Strahlenfilters zwischen dem ersten Zustand und dem zweiten Zustand durch die Drehung ausgelegt ist,
wobei im ersten Zustand die zweite Schlitzöffnung mit der ersten Schlitzöffnung ausgerichtet ist, um einen Durchgang zu bilden, der die Strahlen durch die erste Schlitzöffnung und die zweite Schlitzöffnung lässt, und wobei im zweiten Zustand die zweite Schlitzöffnung gegenüber der ersten Schlitzöffnung verschoben ist, so dass die erste Schlitzöffnung durch einen massiven Abschnitt des Abschirmelements blockiert wird,
wobei im zweiten Zustand das Abschirmelement einen ebenen Außenflächenabschnitt aufweist, durch den die hochenergetischen Röntgenstrahlen gelassen werden, und die Fläche des Abschirmelements, von der die Röntgenstrahlen emittiert werden, ebenfalls eben ist.

2. Strahlenfilter nach Anspruch 1, wobei
der Strahlenfilter eine Abschirmelement-Antriebsvorrichtung umfasst, die zum Indrehungversetzen des Abschirmelements konfiguriert ist, so dass der Strahlenfilter durch Drehen des Abschirmelements zwischen dem ersten Zustand und dem zweiten Zustand umgeschaltet wird.

3. Strahlenfilter nach Anspruch 2, wobei
die Abschirmelement-Antriebsvorrichtung eine Trägerstruktur und ein Zahnradgetriebe umfasst, wobei das Zahnradgetriebe in der Trägerstruktur gelagert und mit einem Ende des Abschirmelements in Eingriff ist, so dass das Zahnradgetriebe das Abschirmelement durch Eingriff des Zahnradgetriebes mit dem Abschirmelement in Drehung versetzen kann.

4. Strahlenfilter nach Anspruch 1, wobei
das Abschirmelement aus einer Wolframlegierung hergestellt ist.

5. Dual-Energie-Röntgenprüfsystem, das Folgendes umfasst:
eine Dual-Energie-Röntgenquelle, die zum Emittieren von Dual-Energie-Röntgenstrahlen konfiguriert ist; und
den Strahlenfilter nach einem der Ansprüche 1-4.

## Revendications

1. Filtre de rayons (10) destiné à être utilisé dans un système d'inspection à rayons X à double énergie configuré pour émettre des rayons X de haute énergie et des rayons X de basse énergie,
le filtre de rayons étant commutable entre un premier état dans lequel le filtre à rayons est configuré pour laisser passer les rayons X de haute énergie et les rayons X de basse énergie émis par une source de rayons X et un second état dans lequel le filtre de rayons est configuré pour laisser passer uniquement les rayons X de haute énergie,
le filtre à rayons comprenant un corps de filtre de rayons (2) présentant une première ouverture en fente (1) à travers laquelle les rayons X sont émis et qui est une ouverture en fente allongée, et un élément de blindage (3) qui est une tige cylindrique allongée,
dans lequel l'élément de blindage est fourni dans le corps de filtre de rayons dans une direction perpendiculaire à une direction d'émission des rayons, et dans lequel l'élément de blindage est disposé de manière à pouvoir être mis en rotation,
dans lequel l'élément de blindage comprend une seconde ouverture en fente (6) qui traverse ledit élément de blindage pour former un trou traversant en forme de fente, et l'élément de blindage est disposé pour commuter le filtre de rayons entre le premier état et le second état de par la rotation,
dans lequel, dans le premier état, la seconde ouverture en fente est alignée avec la première ouverture en fente de manière à former un passage permettant aux rayons de traverser la première ouverture en fente et la seconde ouverture en fente, et dans lequel, dans le second état, la seconde ouverture en fente est décalée de la première ouverture en fente de telle sorte que la première ouverture en fente soit bloquée par une partie solide de l'élément de blindage,
dans lequel, dans le second état, l'élément de blindage présente une partie de surface extérieure plane à travers laquelle les rayons X de haute énergie sont transmis et la face de l'élément de blindage à partir de laquelle les rayons X sont émis est également plane.

2. Filtre de rayons selon la revendication 1, dans lequel
le filtre de rayons comprend un dispositif d'entraînement d'élément de blindage configuré pour entraîner l'élément de blindage en rotation de telle sorte que le filtre de rayons commute entre le premier état et le second état de par la rotation de l'élément de blindage.

3. Filtre de rayons selon la revendication 2, dans lequel
le dispositif d'entraînement d'élément de blindage comprend une structure de support et une transmission à engrenages, la transmission à engrenages étant soutenue dans la structure de support et enclenchée avec une extrémité de l'élément de blindage de telle sorte que la transmission à engrenages puisse entraîner l'élément de blindage en rotation par le biais de l'enclenchement de la transmission à engrenages avec l'élément de blindage.

4. Filtre de rayons selon la revendication 1, dans lequel l'élément de blindage est formé d'un alliage de tungstène.

5. Système d'inspection par rayons X à double énergie, comprenant :
une source de rayons X à double énergie configurée pour émettre des rayons X à double énergie ; et
le filtre de rayons selon l'une quelconque des revendications 1 à 4.
